# EUROPEAN PATENT SPECIFICATION

(11) **EP 2 865 435 B1**
(45) Date of publication and mention of the grant of the patent: **04.04.2018**
(21) Application number: 13806451.4
(22) Date of filing: 24.04.2013
(51) Int. Cl.: B01D 39/18, B01D 39/16, D21F 11/14, D21H 11/00, D21H 13/00

(54) **FILTERING MATERIAL FOR FILTER AND PRODUCTION PROCESS THEREFOR**
FILTERMATERIAL FÜR FILTER UND HERSTELLUNGSVERFAHREN DAFÜR
MATÉRIAU FILTRANT POUR FILTRE ET SON PROCÉDÉ DE PRODUCTION

(30) Priority: 21.06.2012 JP 2012139299
(43) Date of publication of application: 29.04.2015
(73) Proprietor: MAHLE Filter Systems Japan Corporation, Tokyo 170-0004 (JP)
(72) Inventor: ISHII, Hiroyuki, Tokyo 170-0004 (JP); SUZUKI, Mitsutoshi, Tokyo 170-0004 (JP); HAMADA, Yuichi, Tokyo 170-0004 (JP)
(74) Representative: Grünecker Patent- und Rechtsanwälte PartG mbB
(86) International application number: PCT/JP2013/062024
(87) International publication number: WO 2013/190905

(56) References cited:
- JP-A- H1 085 530
- JP-A- S5 270 107
- JP-A- S5 270 107
- JP-A- H06 240 594
- JP-A- 2000 080 590
- US-A1- 2004 211 160

## Description

### Field of the Invention

The present invention relates to a filtering material for a filter usable in an air cleaner of an automotive internal combustion engine etc. and, more particularly, to an improvement of a filtering material produced by a wet papermaking process using natural fibers such as pulp or linter and chemical fibers such as polyester or rayon.

### Background Art

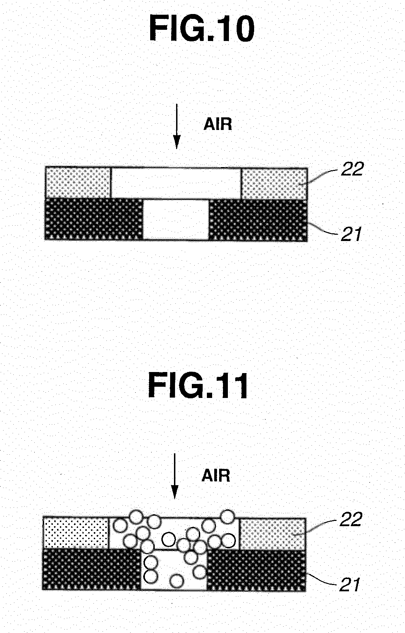

As a filtering material in e.g. an air cleaner of an automotive internal combustion engine, it is common to use a filter paper predominantly of natural fibers such as pulp or linter by folding the filter paper a plurality of times and accommodating the folded filter paper within a case. This filter paper is generally of single-layer structure. On the other hand, there has been put into practical use a composite filtering material of two-layer structure including, as schematically shown in FIG. 10, a lower layer 21 of a relatively high-density filter paper and an upper layer 22 of a relatively low-density nonwoven fabric or filter paper laminated on an upstream side of the lower layer 21 for improvement in filter life. It is noted that, in FIG. 10, the density or pore size of the respective layers are expressed by the size of holes.

In such a two-layer filtering material, large dust particles are collected by the upper layer 22 in the two-layer filtering material. The two-layer filtering material is thus less susceptible to clogging and longer in life than the single-layer filtering material. There is however a problem that the two-layer filtering material is likely to cause clogging at the interface between the two layers 21 and 22 as schematically shown in FIG. 11.

In view of the problem, Patent Document 1 proposes a process of producing a composite filter paper by feeding papermaking raw materials for upper and lower layers on a wire part of a papermaking machine in such a manner as to partially mix these papermaking raw materials and thereby create a continuous density gradient between the upper and lower layers.

It is disclosed in Patent Document 1 that linter fibers and rayon fibers are mixed at different mixing ratios and used as the papermaking raw materials for the upper and lower layers. However, the two-layer filtering material cannot always attain good performance only by the use of the same fibers at different mixing ratios. Although it is particularly required that the air cleaner of the automotive internal combustion engine combines dust collection performance against relatively large dust particles (as tested by e.g. particles of 7 µm) with carbon collection performance against very small carbon particles (e.g. soot of about 0.5 µm), the above conventional two-layer filtering material cannot attain good carbon collection performance.

### Prior Art Documents

### Patent Documents

Patent Document 1 JP S5270107 A

### Summary of the Invention

It is accordingly an object of the present invention to provide a filtering material capable of achieving both of collection efficiency and lift expectancy at high levels by the use of the production process of Patent Document 1.

There is provided according to the present invention a filtering material for a filter, comprising: first and second papermaking raw materials for forming upper and lower layers, according to claim 1.

There is also provided according to the present invention a process of producing a filtering material for a filter, according to claim 6.

In the present invention, both of the natural fibers such as pulp or linter and the chemical fibers such as polyester or rayon are contained in the first papermaking raw material. Similarly, both of the natural fibers and the chemical fibers are contained in the second papermaking raw material in the present invention. However, the natural fibers of the first papermaking raw material and the natural fibers of the second papermaking raw material are not necessarily of the same kind; and the chemical fibers of the first papermaking raw material and the chemical fibers of the second papermaking raw material are not necessarily of the same kind.

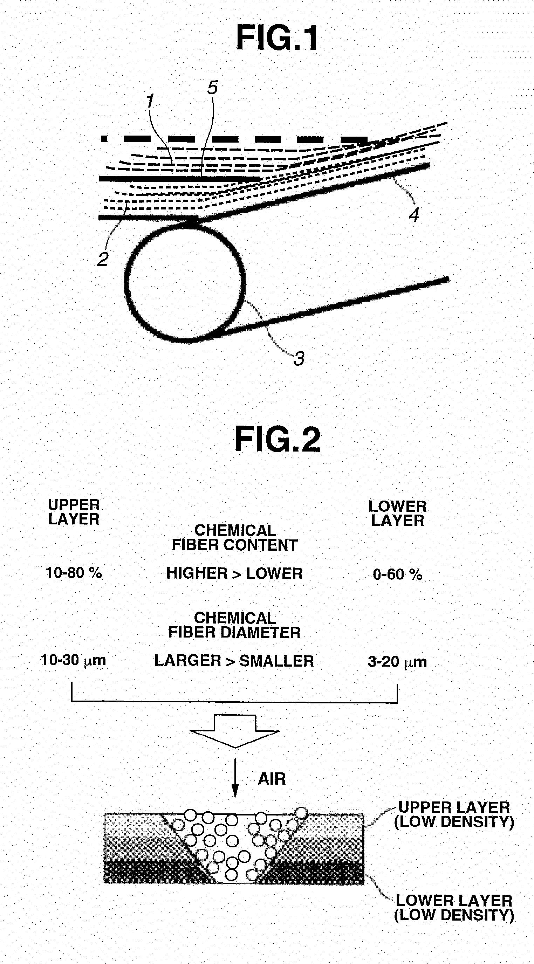

FIG. 1 is a schematic view showing a process of producing the filtering material of the present invention by papermaking. There is no particular difference between the production process of the present invention and the production process of Patent Document 1. The first and second papermaking raw materials 1 and 2 are subjected to papermaking in a papermaking machine by feeding these papermaking raw materials 1 and 2 from respective separate head boxes (not shown) to a wire part of the papermaking machine. Herein, the wire part of the papermaking machine is constituted by a wire transfer drum 3 and a wire 4. In the downstream side of a mixing ratio control plate 5 of the papermaking machine, the first and second papermaking raw materials 1 and 2 are placed on the wire 4 in a state of being partially mixed together without a clear interface defined therebetween. There is thus obtained the filtering material in which the mixing ratio of the first and second papermaking raw materials 1 and 2 is continuously changed from the upper layer to the lower layer. It is noted that, in the present invention, the terms "upper layer" and "lower layer" respectively refer to upstream- and downstream-side layers relative to the flow of a fluid to be filtered (in the case where the filtering material is used in the air cleaner, the flow of air to be filtered) and do not limit that the upper and lower layers must be situated on upper and lower sides during the papermaking process.

FIG. 2 is a schematic view of the filtering material of the present invention. It is noted that, in FIG. 2, the density or pore size of the respective layers are expressed by the size of holes as in the case of FIGS. 10 and 11. In the filtering material of the present invention, the density and pore size are gradually changed so that there exists no interface between the two layers. The filtering material of the present invention is thus basically unlikely to cause interface clogging.

Due to the fact that the chemical fibers are straight in comparison to the natural fibers such as pulp, the filtering material decreases in density by pore generation when the chemical fibers are contained in a large amount. Even in the case of the same kind of chemical fibers, such a density decrease effect is more pronounced when the chemical fibers are large in diameter. For these reasons, the papermaking process of FIG. 1 is performed in the present invention in such a manner that the mixing ratio of the first and second papermaking raw material is gradually changed so as to not only create a continuous density gradient between the upper and lower layers but also allow a larger amount of the large-diameter chemical fibers to exist in the upper layer and allow a larger amount of the small-diameter chemical fibers to exist in the lower layer. By such a configuration, it is possible to achieve collection efficiency and life expectancy (time elapsed until clogging) at high levels for both of dust collection performance against relatively large dust particles (as tested by e.g. particles of 7 µm) and carbon collection performance against very small carbon particles (e.g. soot of about 0.5 µm).

According to the present invention that: the content of the chemical fibers in the first papermaking raw material is 10 to 80% (in terms of wt%; the same applies to the following); the diameter of the chemical fibers in the first papermaking raw material is 10 to 30 µm; the content of the chemical fibers in the second papermaking raw material is 60% or lower; and the diameter of the chemical fibers in the second papermaking raw material is 3 to 20 µm.

If the content of the chemical fibers in the upper layer is too low, the upper layer becomes low in porosity and cannot obtain a sufficient density decrease effect. If the content of the chemical fibers in the upper layer is too high, the upper layer becomes high in porosity and allows a flow of dust particles therethrough so that the function of the upper layer cannot be performed properly. The content of the chemical fibers in the upper layer is thus in the range of 10 to 80%. On the other hand, it is necessary to contain a large amount of the natural fibers in the lower layer in order that the lower layer becomes higher in density than the upper layer to create a density gradient and in order that the filtering material can be easily pleated in the subsequent process step for use as e.g. an air cleaner element. The content of the chemical fibers in the lower layer is thus in the range of 60% or lower. As mentioned above, the larger the diameter of the chemical fibers, the greater the effect of securing the pores and decreasing the density of the filtering material. Thus, the diameter of the chemical fibers in the upper layer is in the range of 10 to 30 µm; and the diameter of the chemical diameter in the lower layer is in the range of 3 to 20 µm.

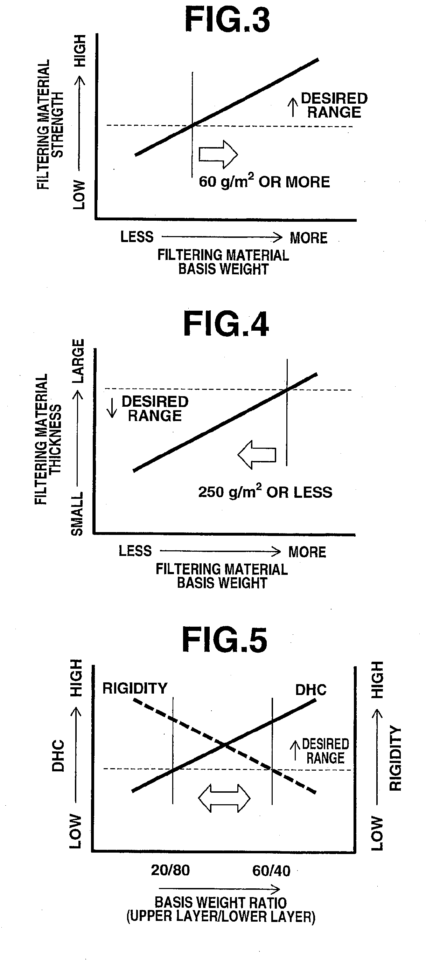

The basis weight of the filtering material is highly correlated with the paper strength (material strength) and thickness of the filtering material as shown in FIG. 3. If the basis weight of the filtering material is less than 60 g/m², the filtering material cannot attain a sufficient strength required for use as a filter such as air cleaner element. The basis weight of the filtering material is thus 60 g/m² or more. The filtering material attains a high strength, but exceeds a given thickness and cannot secure a sufficient required filtration area (i.e. becomes too bulky) for installation as a pleated filter (air cleaner element etc.) in a case, if the basis weight of the filtering material is more than 250 g/m². In addition, the filtering material becomes high in airflow resistance due too large thickness. The basis weight of the filtering material is thus 250 g/m² or less.

It is preferable in the present invention that the first and second papermaking raw materials are contained at a basis weight ratio of 2:8 to 6:4.

In the case where the filtering material has a density gravity as in the present invention, the basis weigh ratio of the upper and lower layers is highly correlated with the filtration performance (expressed as dust holding capacity: DHC in the figure) and rigidity of the filtering material as shown in FIG. 5. As the proportion of the upstream-side low-density layer becomes increased, the filtering material improves in life with respect to dust collection performance. However, it is likely that the filtering material will deteriorate in rigidity and cause deterioration in filter performance (life and collection efficiency) due to adhesion of the filtering material if the proportion of the downstream-side high-density layer becomes too low. Thus, the basis weight ratio of the first and second papermaking raw materials is preferably in the range of 2:8 to 6:4 in view of the filtration performance and rigidity.

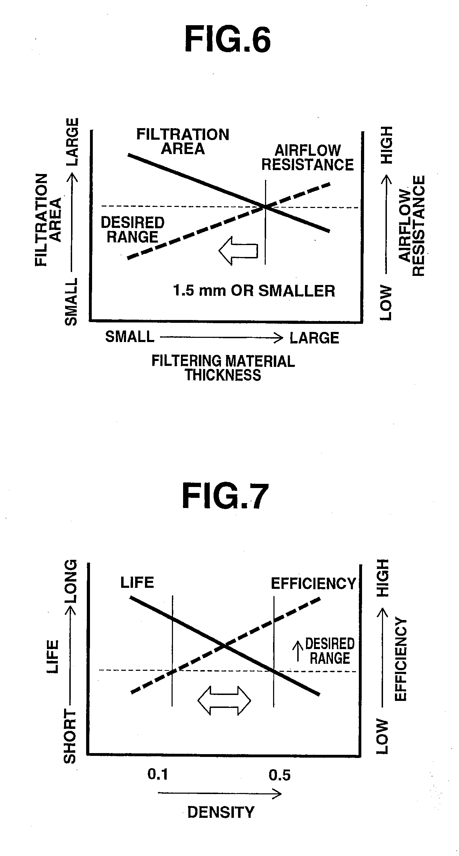

It is also preferable that the filtering material has a thickness of 0.4 to 1.5 mm. As shown in FIG. 6, the thickness of the filtering material is highly correlated with the filtration area and airflow resistance of the filtering material. The smaller the thickness of the filtering material, the larger the filtration area and the lower the airflow resistance in the same type of filter. The thickness of the filtering material is thus preferably smaller than or equal to 1.5 mm. In view of the strength, however, the thickness of the filtering material needs to be at least 0.4 mm.

Further, it is preferable that the filtering material has a density of 0.1 to 0.5 g/cm³. The density of the filtering material is highly correlated with the filtration performance of the filtering material as shown in FIG. 7. The lower the density of the filtering material, the longer the life of the filtering material until the occurrence of clogging. However, the lower the density of the filtering material, the lower the collection efficiency of the filtering material. The density of the filtering material is thus preferably in the range of 0.1 to 0.5 g/cm³ in view of the balance between the life and collection efficiency.

As mentioned above, it is possible according to the present invention to provide the filtering material capable of filtering out a wide size range of particles, from fine particles like exhaust carbon particles to relatively large coarse dust particles, while securing a long life until the occurrence of clogging.

### Brief Description of the Drawings

FIG. 1 is a schematic view of a papermaking process applicable to the present invention.
FIG. 2 is a schematic view of a filtering material according to the present invention.
FIG. 3 is a characteristic diagram showing a relationship between the basis weight and strength of the filtering material.
FIG. 4 is a characteristic diagram showing a relationship between the basis weight and thickness of the filtering material.
FIG. 5 is a characteristic diagram showing a relationship between the basis weight ratio and filtration performance of the filtering material.
FIG. 6 is a characteristic diagram showing a relationship between the thickness, filtration area and airflow resistance of the filtering material.
FIG. 7 is a characteristic diagram showing a relationship between the density and filtration performance of the filtering material.
FIG. 8 is a characteristic diagram showing the dust collection performance of the filtering material according to Example of the present invention in comparison to that of Comparative Example.
FIG. 9 is a characteristic diagram showing the carbon collection performance of the filtering material according to Example of the present invention in comparison to that of Comparative Example.
FIG. 10 is a schematic view of a conventional two-layer filtering material.
FIG. 11 is a schematic view showing the occurrence of clogging at a layer interface in the conventional two-layer filtering material.

### Description of the Embodiments

Hereinafter, specific embodiments of the present invention will be described in detail below. The following explanation will be given of the use of the filtering material in an air cleaner element of an automotive internal combustion engine by way of example.

### Example 1

As indicated in TABLE 1, a blend of 40% mercerized pulp as chemical fibers and 60% PET (polyethylene terephthalate) fibers of 18 µm diameter as natural fibers was prepared as a first paper raw material for an upper layer; and a blend of 35% mercerized pulp and 60% non-mercerized normal pulp as chemical fibers and 5% PET fibers of 9 µm diameter as chemical fibers was prepared as a second papermaking raw material for a lower layer. It is herein noted that: the mercerized pulp, which has a curl by alkaline treatment, is more bulky and lower in density than the normal pulp; whereas the normal pulp is higher in strength than the mercerized pulp.

The above-mentioned wet papermaking process of FIG. 1 was performed on these first and second papermaking raw materials, thereby forming a filtering material with a continuous density gradient. At this time, the feed amounts of the first and second papermaking raw materials were adjusted in such a manner that: the overall basis weight of the filtering material was 120 g/m²; and the basis weigh ratio of the first and second papermaking raw materials was 4:6. The thus-obtained filtering material had a thickness of 0.95 mm (without calendaring treatment), a pore size of 75 µm and an overall density of 0.13 g/cm³.

### Example 2

As also indicated in TABLE 1, a blend of 80% mercerized pulp as natural fibers and 20% PET fibers of 12 µm diameter as chemical fibers was prepared as a first papermaking raw material for an upper layer; and a blend of 20% mercerized pulp and 65% non-mercerized normal pulp as chemical fibers and 15% PET fibers of 9 µm diameter as chemical fibers was prepared as a second papermaking raw material for a lower layer.

The above-mentioned wet papermaking process of FIG. 1 was performed on these first and second papermaking raw materials, thereby forming a filtering material with a continuous density gradient. At this time, the feed amounts of the first and second papermaking raw materials were adjusted in such a manner that: the overall basis weight of the filtering material was 100 g/m²; and the basis weigh ratio of the first and second papermaking raw materials was 3:7. The thus-obtained filtering material had a thickness of 0.60 mm (without calendaring treatment), a pore size of 90 µm and an overall density of 0.17 g/cm³.

### Example 3

As also indicated in TABLE 1, a blend of 35% mercerized pulp and 15% non-mercerized normal pulp as natural fibers and 20% PET fibers of 18 µm diameter and 30% PET fibers of 8 µm diameter as chemical fibers was prepared as a first papermaking raw material for an upper layer; and a blend of 15% mercerized pulp and 40% non-mercerized normal pulp as natural fibers and 35% PET fibers of 8 µm diameter and 10% PET fibers of 3 µm diameter as chemical fibers was prepared as a second papermaking raw material for a lower layer.

The above-mentioned wet papermaking process of FIG. 1 was performed on these first and second papermaking raw materials, thereby forming a filtering material with a continuous density gradient. At this time, the feed amounts of the first and second papermaking raw materials were adjusted in such a manner that: the overall basis weight of the filtering material was 80 g/m²; and the basis weigh ratio of the first and second papermaking raw materials was 6:4. The thus-obtained filtering material had a thickness of 0.56 mm (without calendaring treatment), a pore size of 60 µm and an overall density of 0.14 g/cm³.

**TABLE 1**

| | Example 1 | | Example 2 | | Example 3 | |
|---|---|---|---|---|---|---|
| Content ratio (%) of first papermaking raw material | mercerized pulp | 40 | mercerized pulp | 80 | mercerized pulp | 35 |
| | PET (18 µm) | 60 | PET (12 µm) | 20 | pulp | 15 |
| | | | | | PET (18 µm) | 20 |
| | | | | | PET (8 µm) | 30 |
| Content ratio (%) of second papermaking raw material | mercerized pulp | 35 | mercerized pulp | 20 | mercerized pulp | 15 |
| | pulp | 60 | pulp | 65 | pulp | 40 |
| | PET (9 µm) | 5 | PET (9 µm) | 15 | PET (18 µm) | 35 |
| | | | | | PET (3 µm) | 10 |
| Physical Properties | | | | | | |
| Filtering material basis weight (g/m²) | 120 | | 100 | | 80 | |
| Basis weight ratio (upper layer:lower layer) | 4:6 | | 3:7 | | 6:4 | |
| Thickness (mm) | 0.95 | | 0.60 | | 0.56 | |
| Pore size (µm) | 75 | | 90 | | 60 | |
| Density (g/cm³) | 0.13 | | 0.17 | | 0.14 | |

The papermaking raw materials and the physical properties of the filtering materials of Comparative Examples 4 to 14 are indicated in TABLES 2 to 5. Each of the filtering materials of Comparative Examples 4, 5 and 6 was of two-layer structure using two kinds of papermaking raw materials of high density and low density. In Comparative Examples 4, 5 and 6, the raw materials were subjected to papermaking so as to create a continuous density gradient by the papermaking process of FIG. 1 in the same manner as in Examples 1 to 3. Each of the filtering materials of Comparative Examples 7 to 14 was of single-layer structure using one kind of papermaking raw material.

**TABLE 2**

| | Comparative Example 4 | | Comparative Example 5 | | Comparative Example 6 | |
|---|---|---|---|---|---|---|
| Content ratio (%) of first papermaking raw material | PET (15 µm) | 100 | PET (18 µm) | 100 | PET (18 µm) | 100 |
| Content ratio (%) of second papermaking raw material | pulp | 100 | pulp | 100 | mercerized pulp | 10 |
| | | | | | pulp | 75 |
| | | | | | PET (6 µm) | 15 |
| Physical Properties | | | | | | |
| Filtering material basis weight (g/m²) | 112 | | 120 | | 114 | |
| Basis weight ratio (upper layer: lower layer) | 4:6 | | 25:75 | | 15:85 | |
| Thickness (mm) | 0.81 | | 0.70 | | 0.75 | |
| Pore size (µm) | 66 | | 48 | | 50 | |
| Density (g/cm³) | 0.14 | | 0.17 | | 0.15 | |

**TABLE 3**

| | Comparative Example 7 | | Comparative Example 8 | | Comparative Example 9 | |
|---|---|---|---|---|---|---|
| Content ratio (%) of first papermaking raw material | - | | - | | - | |
| Content ratio (%) of second papermaking raw material | pulp | 100 | pulp | 100 | mercerized pulp | 55 |
| | | | | | pulp | 35 |
| | | | | | PET (6 µm) | 10 |
| Physical Properties | | | | | | |
| Filtering material basis weight (g/m²) | 90 | | 90 | | 95 | |
| Basis weight ratio (upper layer:lower layer) | - | | - | | - | |
| Thickness (mm) | 0.53 | | 0.43 | | 0.58 | |
| Pore size (µm) | 75 | | 48 | | 80 | |
| Density (g/cm³) | 0.17 | | 0.21 | | 0.16 | |

**TABLE 4**

| | Comparative Example 10 | | Comparative Example 11 | | Comparative Example 12 | |
|---|---|---|---|---|---|---|
| Content ratio (%) of first papermaking raw material | - | | - | | - | |
| Content ratio (%) of | mercerized pulp | 52 | mercerized pulp | 15 | mercerized pulp | 55 |
| second papermaking | pulp | 43 | pulp | 85 | pulp | 35 |
| raw material | PET (6 µm) | 5 | | | PET (6 µm) | 10 |
| Physical Properties | | | | | | |
| Filtering material basis weight (g/m²) | 103 | | 92 | | 93 | |
| Basis weight ratio (upper layer:lower layer) | - | | - | | - | |
| Thickness (mm) | 0.50 | | 0.40 | | 0.48 | |
| Pore size (µm) | 72 | | 50 | | 81 | |
| Density (g/cm³) | 0.21 | | 0.23 | | 0.19 | |

**TABLE 5**

| | Comparative Example 13 | | Comparative Example 14 | |
|---|---|---|---|---|
| Content ratio (%) of first papermaking raw material | - | | - | |
| Content ratio (%) of second papermaking raw material | mercerized pulp | 25 | pulp | 100 |
| | pulp | 75 | | |
| Physical Properties | | | | |
| Filtering material basis weight (g/m²) | 105 | | 90 | |
| Basis weight ratio (upper layer:lower layer) | - | | - | |
| Thickness (mm) | 0.40 | | 0.26 | |
| Pore size (µm) | 75 | | 45 | |
| Density (g/cm³) | 0.26 | | 0.35 | |

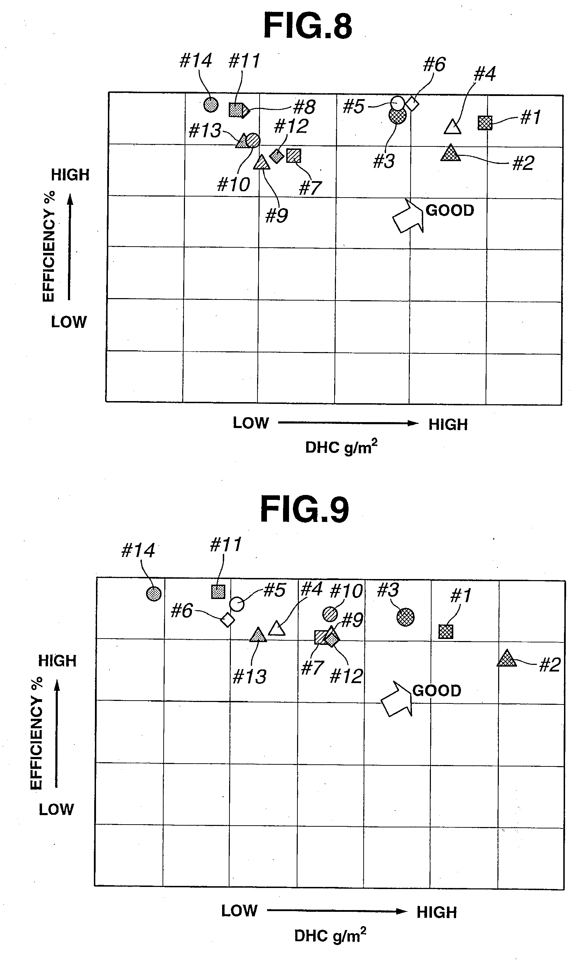

FIG. 8 is a diagram showing the results of the dust collection performance test on the filtering materials of Examples 1 to 3 and Comparative Examples 4 to 14. The dust collection performance test was conducted by using each filtering material as a sample and continuously feeding air, which contained dust of 7 µm particle diameter categorized as "fine dust", through each filtering material sample. In this test, the amount of the dust collected by the filtering material until the filtering material reached a predetermined increase in airflow resistance was determined as dust holding capacity (DHC); and the ratio of the amount of the dust collected to the amount of the dust fed was determined as efficiency. The total performance (life and collection efficiency) of each filtering material is plotted by one point with the dust holding capacity on the horizontal axis and the efficiency on the vertical axis in the diagram. The plot points #1 to #3 represent the test results of Examples 1 to 3; the plot points #4 to #14 represent the test results of Comparative Examples 4 to 14.

FIG. 9 is a diagram showing the results of the carbon collection performance test on the filtering materials of Examples 1 to 3 and Comparative Examples 4 to 14. The carbon collection performance test was conducted in the same manner as the above dust collection performance test, except for using carbon (soot) of 0.5 µm particle diameter in place of the dust of 7 µm particle diameter and plotting carbon holding capacity (CHC) on the horizontal axis in the diagram.

In FIG. 8 and 9, the upper right regions represent high levels of life and collection efficiency as indicated by arrows. The dust collection performance of FIG. 8 is the performance of the filtering material against relatively large dust particles flying in the air; the carbon collection performance of FIG. 9 is the performance of the filtering material against very fine particles like exhaust carbon particles. As is apparent from FIGS. 8 and 9, the life and collection efficiency of the filtering material were achieved at high levels with respect to both of the dust collection performance and the carbon collection performance in each of Examples 1 to 3 of the present invention. In particular, the life of the filtering material was significantly improved with respect to the carbon collection performance in Examples 1 to 3 as compared to Comparative Examples 4 to 14.

The use of the filtering material of the present invention is not limited to the air cleaner. The filtering material of the present invention can be used for an oil filter, a fuel filter or the like.

## Claims

1. A filtering material for a filter, comprising:
first and second papermaking raw materials for forming upper and lower layers, respectively, so as to show a continuous density gradient from the upper layer to the lower layer,
wherein the first and second papermaking raw materials are subjected to papermaking, thereby forming an upper layer predominantly of the first papermaking raw material and a lower layer predominantly of the second papermaking raw material within a basis weight range of the filtering material from 60 to 250 g/m2 while continuously changing a mixing ratio of the first and second paper raw materials from the upper layer to the lower layer;
wherein each of the first and second papermaking raw materials contains natural fibers and chemical fibers;
wherein the content of the chemical fibers in the first papermaking raw material is higher than the content of the chemical fibers in the second papermaking raw material;
wherein the content of the chemical fibers in the first papermaking raw material is 10 to 80%;
wherein the content of the chemical fibers in the second papermaking raw material is 60% or lower;
wherein the diameter of the chemical fibers in the first papermaking raw material is greater than the diameter of the chemical fibers in the second papermaking raw material;
wherein the diameter of the chemical fibers in the first papermaking raw material is 10 µm to 30 µm;
wherein the diameter the chemical fibers in the second papermaking raw material is 3 to 20 µm.

2. The filtering material for the filter according to claim 1, wherein the first and second papermaking raw materials are contained at a basis weight ratio of 2:8 to 6:4.

3. The filtering material for the filter according to claim 1 or 2, wherein the filtering material has a thickness of 0.4 to 1.5 mm.

4. The filtering material for the filter according to any one of claims 1 to 3, wherein the filtering material has a density of 0.1 to 0.5 g/cm³.

5. The filtering material for the filter according to any one of claims 1 to 4, wherein the filtering material has been subjected to pleating after papermaking and adapted for use in an air cleaner of an automotive internal combustion engine.

6. A process of producing a filtering material for a filter, comprising:
preparing first and second papermaking raw materials, each of which contains natural fibers and chemical fibers, wherein the content of the chemical fibers in the first papermaking raw material being higher than the content of the chemical fibers in the second papermaking raw material, wherein the content of the chemical fibers in the first papermaking raw material being 10 to 80%, wherein the content of the chemical fibers in the second papermaking raw material being 60% or lower, wherein the diameter of the chemical fibers in the first papermaking raw material being greater than the diameter of the chemical fibers in the second papermaking raw material, wherein the diameter of the chemical fibers in the first papermaking raw material is 10 to 30 µm, and wherein the diameter of the chemical fibers in the second papermaking raw material is 3 to 20 µm; and
subjecting the first and second papermaking raw materials to papermaking, thereby forming the filtering material an upper layer predominantly of the first papermaking raw material and a lower layer predominantly of the second papermaking raw material within a basis weight range of the filtering material from 60 to 250 g/m² while continuously changing a mixing ratio of the first and second paper raw materials from the upper layer to the lower layer.

## Patentansprüche

1. Filtermaterial für ein Filter, umfassend:
erste und zweite Papierherstellungsrohmaterialien zum Ausbilden der oberen bzw. unteren Schichten, um einen kontinuierlichen Dichtegradienten von der oberen Schicht zu der unteren Schicht aufzuweisen,
wobei das erste und das zweite Papierherstellungsrohmaterial einer Papierherstellung unterzogen werden, wodurch eine obere Schicht vorwiegend aus dem ersten Papierherstellungsrohmaterial und eine untere Schicht überwiegend aus dem zweiten Papierherstellungsrohmaterial innerhalb eines Basisgewichtsbereichs des Filtermaterials von 60 bis 250 g/m2 ausgebildet werden, während kontinuierlich ein Mischungsverhältnis des ersten und zweiten Papierrohmaterials von der oberen Schicht zu der unteren Schicht geändert wird;
wobei jedes der ersten und zweiten Papierherstellungsrohmaterialien natürliche Fasern und chemische Fasern umfasst;
der Gehalt der chemischen Fasern in dem ersten Papierherstellungsrohmaterial höher ist als der Gehalt der chemischen Fasern in dem zweiten Papierherstellungsrohmaterial;
der Gehalt der chemischen Fasern in dem ersten Papierherstellungsrohmaterial 10 bis 80% beträgt;
der Gehalt der chemischen Fasern in dem zweiten Papierherstellungsrohmaterial 60% oder weniger beträgt;
der Durchmesser der chemischen Fasern in dem ersten Papierherstellungsrohmaterial größer ist als der Durchmesser der chemischen Fasern in dem zweiten Papierherstellungsrohmaterial;
der Durchmesser der chemischen Fasern in dem ersten Papierherstellungsrohmaterial 10 µm bis 30 µm beträgt; und
der Durchmesser der chemischen Fasern in dem zweiten Papierherstellungsrohmaterial 3 bis 20 µm beträgt.

2. Filtermaterial für das Filter nach Anspruch 1, bei dem das erste und das zweite Papierherstellungsrohmaterial in einem Basisgewichtsverhältnis von 2:8 bis 6:4 enthalten sind.

3. Filtermaterial für das Filter nach Anspruch 1 oder 2, bei dem das Filtermaterial eine Dicke von 0,4 bis 1,5 mm aufweist.

4. Filtermaterial für das Filter nach einem der Ansprüche 1 bis 3, bei dem das Filtermaterial eine Dichte von 0,1 bis 0,5 g/cm³ aufweist.

5. Filtermaterial für das Filter nach einem der Ansprüche 1 bis 4, bei dem das Filtermaterial einer Plissierung nach der Papierherstellung unterzogen wurde und zur Verwendung in einem Luftfilter einer Kraftfahrzeug-Brennkraftmaschine eingerichtet ist.

6. Verfahren für die Herstellung eines Filtermaterials für ein Filter, umfassend:
Vorbereiten von ersten und zweiten Papierherstellungsrohmaterialien, von denen jedes natürliche Fasern und chemische Fasern umfasst, wobei der Gehalt der chemischen Fasern in dem ersten Papierherstellungsrohmaterial höher ist als der Gehalt der chemischen Fasern in dem zweiten Papierherstellungsrohmaterial, der Gehalt der chemischen Fasern in dem ersten Papierherstellungsrohmaterial 10 bis 80% beträgt, der Gehalt der chemischen Fasern in dem zweiten Papierherstellungsrohmaterial 60% oder weniger beträgt, der Durchmesser der chemischen Fasern in dem ersten Papierherstellungsrohmaterial größer ist als der Durchmesser der chemischen Fasern in dem zweiten Papierherstellungsrohmaterial, der Durchmesser der chemischen Fasern in dem ersten Papierherstellungsrohmaterial 10 bis 30 µm beträgt und der Durchmesser der chemischen Fasern in dem zweiten Papierherstellungsrohmaterial 3 bis 20 µm beträgt; und
Unterziehen des ersten und des zweiten Papierherstellungsrohmaterials einer Papierherstellung, wodurch das Filtermaterial eine obere Schicht überwiegend aus dem ersten Papierherstellungsrohmaterial und eine untere Schicht überwiegend aus dem zweiten Papierherstellungsrohmaterial innerhalb eines Basisgewichtsbereichs des Filtermaterials von 60 bis 250 g/m² ausbildet, während das Mischungsverhältnis des ersten und des zweiten Papierrohmaterials kontinuierlich von der oberen Schicht zur unteren Schicht geändert wird.

## Revendications

1. Matériau de filtrage destiné à un filtre comprenant :
des première et seconde matières premières de fabrication du papier permettant de former respectivement des couches supérieure et inférieure de sorte à présenter un gradient de densité continu allant de la couche supérieure à la couche inférieure,
dans lequel les première et seconde matières premières de fabrication du papier sont soumises un processus de fabrication du papier, ce qui forme ainsi une couche supérieure constituée principalement de la première matière première de fabrication de papier et une couche inférieure constituée principalement de la seconde matière première de fabrication de papier, dans une plage de poids de base du matériau de filtrage allant de 60 à 250 g/m² tout en modifiant de manière continue le rapport de mélange des première et seconde matières premières depuis la couche supérieure jusqu'à la couche inférieure,
dans lequel chacune des première et seconde matières premières de fabrication du papier contient des fibres naturelles et des fibres chimiques,
dans lequel la teneur en fibres chimiques dans la première matière première de fabrication de papier est supérieure à la teneur en fibres chimiques dans la seconde matière première de fabrication de papier,
dans lequel la teneur en fibres chimiques dans la première matière première de fabrication de papier vaut de 10 % à 80 %,
dans lequel la teneur en fibres chimiques dans la seconde matière première de fabrication de papier vaut 60 % ou moins,
dans lequel le diamètre des fibres chimiques dans la première matière première de fabrication de papier est supérieur au diamètre des fibres chimiques dans la seconde matière première de fabrication de papier,
dans lequel le diamètre des fibres chimiques dans la première matière première de fabrication de papier vaut de 10 µm à 30 µm,
dans lequel le diamètre des fibres chimiques dans la seconde matière première de fabrication de papier vaut de 3 µm à 20 µm.

2. Matériau de filtrage pour un filtre selon la revendication 1, dans lequel les première et seconde matières premières de fabrication du papier sont contenues avec un rapport de poids de base allant de 2 : 8 à 6 : 4.

3. Matériau de filtrage pour un filtre selon la revendication 1 ou la revendication 2, le matériau de filtrage présentant une épaisseur de 0,4 à 1,5 mm.

4. Matériau de filtrage pour un filtre selon l'une quelconque des revendications 1 à 3, le matériau de filtrage présentant une densité de 0,1 à 0,5 g/cm³.

5. Matériau de filtrage pour un filtre selon l'une quelconque des revendications 1 à 4, le matériau de filtrage ayant été soumis à un processus de pressage après le processus de fabrication de papier et étant conçu pour une utilisation dans un filtre à air de moteur à combustion interne d'automobile.

6. Processus de fabrication d'un matériau de filtrage destiné à un filtre, comprenant :
la préparation de première et seconde matières premières de fabrication du papier dont chacune contient des fibres naturelles et des fibres chimiques, la teneur en fibres chimiques dans la première matière première de fabrication de papier étant supérieure à la teneur en fibres chimiques dans la seconde matière première de fabrication de papier, la teneur en fibres chimiques dans la première matière première de fabrication de papier valant de 10 % à 80 %, la teneur en fibres chimiques dans la seconde matière première de fabrication de papier valant 60 % ou moins, le diamètre des fibres chimiques dans la première matière première de fabrication de papier étant supérieur au diamètre des fibres chimiques dans la seconde matière première de fabrication de papier, le diamètre des fibres chimiques dans la première matière première de fabrication de papier valant de 10 µm à 30 µm et le diamètre des fibres chimiques dans la seconde matière première de fabrication de papier valant de 3 µm à 20 µm, et
la soumission des première et seconde matières premières de fabrication du papier à un processus de fabrication du papier, ce qui forme ainsi le matériau de filtrage dont la couche supérieure est constituée principalement de la première matière première de fabrication de papier et la couche inférieure est constituée principalement de la seconde matière première de fabrication de papier dans une plage de poids de base du matériau de filtrage allant de 60 à 250 g/m² tout en modifiant de manière continue le rapport de mélange des première et seconde matières premières en papier depuis la couche supérieure jusqu'à la couche inférieure.
